# EUROPEAN PATENT SPECIFICATION

(11) **EP 3 124 556 B1**
(45) Date of publication and mention of the grant of the patent: **18.04.2018**
(21) Application number: 15179376.7
(22) Date of filing: 31.07.2015
(51) Int. Cl.: C09D 11/037, C09D 11/08, C09D 11/10, C09D 11/107

(54) **WATER-BASED INKS COMPRISING LIGNIN**
WASSERBASIERTE TINTEN AUS LIGNIN
ENCRES À BASE D'EAU COMPRENANT DE LA LIGNINE

(43) Date of publication of application: 01.02.2017
(73) Proprietor: Siegwerk Druckfarben AG & Co. KGaA, 53721 Siegburg (DE)
(72) Inventor: Noirot, Pierre-Antoine, 74800 Arenthon (FR); Bouchard, Charles, 74100 Annemasse (FR); Manouvel, Lydie, 74460 Marnaz (FR); Helgertz, Nina, 74100 Annemasse (FR); Tonnoir, Olivier, 74960 Meythet (FR)
(74) Representative: Hepp Wenger Ryffel AG

(56) References cited:
- EP-A1- 1 840 145
- EP-A1- 2 620 480
- US-A- 5 188 665
- US-A- 5 192 361
- US-A1- 2003 076 393

## Description

The present invention is related to water-based inks comprising lignin and having improved properties such as improved water resistance.

Gravure and flexography are the major printing processes for printing packing materials. These processes can be used for printing a large variety of substrates, such as paper, cardboard, or plastic substrates. The gravure and flexographic printing processes are well-known. Reference may be made, for example, to Leach/Pierce (Eds.), The printing ink manual, Blueprint, London, 5th ed. 1993, p, 33-53. Also the characteristics of gravure and flexographic inks are known to the skilled man. Reference may be made, for example, to Leach/Pierce (Eds.), The printing ink manual, Blueprint, London, 5th ed. 1993, p, 473-598. The respective content of those chapters is incorporated herein by reference.

In recent years, there has been an increasing trend from solvent-based ink compositions (i.e. inks which are formulated on the basis of an organic solvent) to water-based ink compositions (i.e. inks which are formulated on the basis of water as a solvent), mainly because of environmental concerns against VOCs (volatile organic components). Water-based inks are already widely used for printing paper or paperboard articles and packagings.

While several synthetic binder components for water-based printing inks, such as gravure and flexographic inks, are known, for environmental reasons it would be desirable to use at least as a portion of the binder component a renewable material.

Lignin is a biopolymer occurring in lignocellulosic plants, such as wood and annual plants (for example grass and wheat straw). It consists of phenolic macromolecules with varying structure and is renewable. Industrially, lignin is obtained as a by-product of the paper-pulping process. Kraft lignin is obtained from the Kraft process; soda lignin is obtained from the soda process, both processes being alkaline processes where hydroxyl ions play an important role in the delignification of the cellulose, generating a pH of up to 13. Reference may be made for example to Fengel, D. and Wegener, G., 1983. Wood: chemistry, ultrastructure, reactions, Walter de Gruyter. Kraft and soda lignins can be described collectively as alkaline lignins. These processes as well as the lignin products obtained thereby are well-known in the art and do not have to be discussed here in detail.

During the last two decades, alkaline lignin from the Kraft process has been used as such in some applications, including as tackifier and antioxidant for rubber compounds, in wood composites by replacing a part of phenolic resins with lignin in a phenol-formaldehyde resin formulation, or in degradable plastic polymeric blends.

There have been disclosures on the use of lignins from the above Kraft process or from the alternative sulfite process as binder component in printing inks. Reference is made to the following patents from Westvaco Corp.: US-5,192,361; US-5,188,665; US-4,957,557; US-4,891,070; US-6,045,606; US-4,892,587; US-4,612,051. It has to be noted, however, that those old patents have never matured into a commercial printing ink comprising lignin as a binder component. Apparently, those formulations did not show sufficient properties for gravure and flexographic inks. In particular, lignin has a very dark color making it not suitable for most printing ink applications.

In addition, those inks from the prior art based on lignin as a binder do not exhibit sufficient water resistance required for flexographic and gravure printing.

In US-5, 188, 665, there was suggested a water-based black ink on the basis of a lignin amine salt as a binder, wherein in order to obtain sufficient storage stability 10-60 wt.-% of the lignin amine salt were replaced with acrylic resin and/or rosin resin. Water resistance is not mentioned in said patent.

In US-5,192,361, there was suggested a water-based black ink on the basis of a submicron lignin (i.e. a lignin having particles with an average size below 1 µm) as a binder, wherein in order to obtain sufficient storage stability 10-25 wt.-% of the submicron lignin were replaced with acrylic resin and/or rosin resin and/or styrene-maleic anhydride copolymer. Water resistance is not mentioned in said patent. Also, no combination of submicron lignin with more than one of the above mentioned resins and copolymers is explicitly described.

It was the problem of the present invention to provide a water-based ink composition having improved properties, in particular improved water resistance and renewability.

According to the present invention, said problem has been solved by a water-based ink composition containing an extender part and a pigment base part, characterized in that a binder in the extender part is a combination of a lignin, at least one acrylic resin and at least one co-resin, wherein said co-resin is selected from the group consisting of polyamides, polyurethanes, polyurethane-acrylic copolymers, polyvinylalcohol resins, polyvinylacetates, sulfopolyesters resins, styrene-butadiene rubbers, ethylene-acrylic acid copolymers, perfluoropolyethers resins, polyolefins and chlorinated polyolefins, preferably from the group consisting of polyamides, polyurethanes, polyvinylacetates and sulfopolyesters resins.

According to the present invention, the term "water-based" defines a composition which is essentially composed of water as the only solvent present in the composition. Other solvents, in particular organic solvents, should not be present in an amount exceeding 10 wt.-%, preferably not exceeding 5 wt.-%, of the weight of the entire composition.

The water-based inks of the present invention are characterized by the presence of lignin as a binder in the extender part of the ink, which provides for the desired renewability of the inks. In the extender part of the inks of the present invention, the lignin is used in combination with two other binder components, i.e. at least one acrylic resin and at least one co-resin, wherein said co-resin is selected from the group consisting of polyamides, polyurethanes, polyurethane-acrylic copolymers, polyvinylalcohol resins, polyvinylacetates, sulfopolyesters resins, styrene-butadiene rubbers, ethylene-acrylic acid copolymers, perfluoropolyethers resins, polyolefins and chlorinated polyolefins, preferably from the group consisting of polyamides, polyurethanes, polyvinylacetates and sulfopolyesters resins. It has been surprisingly found that a combination of those three components in the binder of the extender part of the water-based inks of the present invention results in an improved water resistance of these inks.

Flexographic and gravure printing ink compositions are commonly made from two different portions. One portion, the so-called "pigment base" portion, comprises a colorant, preferably a pigment. In the pigment base, the colorant is blended with a suitable binder, optionally a solvent and commonly used additives. Said pigment base portion is then blended with the so-called "extender part" of the ink composition. Said extender part comprises the major portion of the ink's binder, as well as optionally solvent and commonly used additives. The present invention is related to an improvement of the extender part of such inks.

One component of the binder of the extender part of the ink compositions of the present invention is a lignin.

Lignin is a biopolymer occurring in plants, such as wood. It consists of phenolic macromolecules with varying structure and is renewable. A sample structure of lignin is shown below:

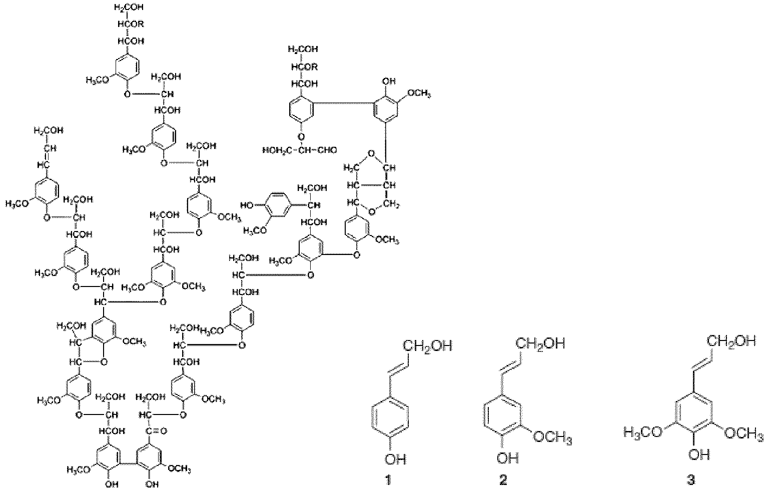

The units 1, 2 and 3 represent phenyl propane monomers that can be found in lignin: 1) p-coumaryl alcohol; 2) coniferyl alcohol; 3) syringyl alcohol.

Industrially, lignin is obtained as a by-product of the paper-pulping process, or any other process aiming at separating the various components of the lignocellulosic biomass to valorise in particular the cellulose.

According to a preferred embodiment of the present invention, said lignin is selected from the group of lignins consisting of alkaline lignin from the Kraft or soda process, sulfur-free lignins, and derivatives therefrom, preferably a lignin amine salt, a submicron lignin, and a lignin neutralized with KOH.

Lignin from the Kraft process (sometimes called thio lignin or alkaline lignin)) is well-known. It is obtained during Kraft pulping in alkaline medium, as is known in the art. In the Kraft process, wood or annual plants are cooked with a solution, called "white liquor", containing sodium hydroxide and sodium sulfide. The dark solution of the degraded lignin which is dissolved out from the wood (the main product of said process being wood pulp) is commonly known as "black liquor". Said solution contains the degraded lignins and some degraded hemicelluloses which have been extracted from the wood during the Kraft process. Different ways are known to recover lignin from black liquor. One of the methods consists in acidification with different kinds of acidic aqueous solution, such as sulfuric acid and hydrochloric acid so that the pH level falls below pH 6, at about pH 2 to 4. Afterwards, the next steps are separation (or dewatering) steps, such as filtration, subsequent washing steps with acidic aqueous solution and separation processes (see EP 1 794 363 B1 for a detailed description). In a second method, gaseous carbon dioxide is added into the black liquor to acidify the solution followed by a separation processes, such as filtration, subsequent washing steps with acidic aqueous solution and final separation processes (see US-5,288,857 for a detailed description).

Lignin from the soda process is also well-known. In the soda process, predominantly non-wood fibres from annual plants, such as straw, sugarcane bagasse, flax etc. are processed with an aqueous solution of sodium hydroxide, occasionally under addition of anthraquinone. Since no sulfur-containing substance is added to the mixture, the resulting lignin is sulfur-free.

Sulfur-free lignins may be also obtained from, for example, biomass conversion technologies, solvent pulping processes (organosolv processes), additionally to soda pulping.

Biomass conversion technologies are predominantly used for the production of liquid fuels, such as ethanol, and typically involve hydrolytic pre-treatment of the biomass. From the pretreated biomass, the lignin can be extracted (for example with a suitable organic solvent or an aqueous alkali solution) and subsequently precipitated.

The solvent pulping process is a known alternative to the Kraft process or sulfite process described above. During the pulping process, the lignin is dissolved in the applied organic solvent (e.g. ethanol), and may be subsequently precipitated therefrom. The resulting lignin is also called organosolv lignin. A commercially applied solvent pulping process is the Alcell® process.

The soda pulping process is a sulfur-free process which may start from non-wood raw materials. The lignin is also here precipitated from the liquid phase obtained in the pulping process. As an example, the commercially used LPS® technology may be employed for obtaining sulfur-free lignin via this route. The LPS® technology leads to lignin having a relatively low silica and ash content. It is characterized by adjusting the pH of the alkaline pulping solution to acidic level and subsequent treatment of the thus obtained dispersion under a specific time and temperature schedule.

Processes for obtaining sulfur-free lignins are described in more detail, for example, in Lora et al., Journal of Polymers and the Environment, vol. 10, 2002, p. 39-47.

Alternatively, according to the present invention it is possible to use an alkaline lignin which has been prepared according to the method described in WO 2007/124400 A2 (Greenvalue S.A.). The content of WO 2007/124400 A2 is incorporated herein by reference. Basically, lignin from e.g. the above described soda process is subjected to a chemo-thermomechanical treatment involving mechanical shear at a maximum temperature of about 100-220°C and a pressure of about 0,5 to 10 atmospheres in the presence of an additive such as a glycol or hexamethyltetramine which lowers the softening point of the lignin. Such alkaline lignins are commercially available as a dry powder under the trade name Protobind sold by ALM India. An exemplary lignin suitable for the present invention is sold under the commercial name Protobind™ 2000 or Protobind™ 2400. However, also other commercially available lignins from, for example, ALM India or Flambeau River paper may be used.

In US-4, 740, 591 a method for forming an amine salt of lignin is described. In said method, lignin is precipitated from the black liquor residue of a Kraft pulping process by acidification and reacted with an organic amine, such as monoethanolamine. In this method the precipitated lignin is acidified to a pH of no lower than about 5 for the wash-water removal of inorganic salts and other impurities. The resulting lignin salt has a high level of water-solubility.

US-5,008,378 teaches a method of producing lignin materials which, in liquid dispersion form, comprise particles having a median particle diameter of less than about one micron, and of such uniform shape and size so as to be readily employed as film-formers and additives in other products and chemical compositions. The lignin material product comprises colloidal dispersion of monodispersed lignin particles which coalesce and dry to form a continuous film which is useful as a binder in pigment printing, coating, and composite board manufacture. Such lignin is herein called "submicron lignin".

According to the present invention, thus a lignin should be used which is insoluble or poorly soluble in neutral water, but is soluble in aqueous alkaline solutions. For example, for lignin, sources include but are not limited to, lignin from softwoods, hardwoods and non-woods such as straw or flax, obtained by a pulping or delignification process including, but not limited to, Kraft, soda, soda-AQ (soda anthraquinone), soda-oxygen, and organosolv, as well as from processes used in, for example, a biorefinery to pre-treat a vegetable biomass to produce ethanol and/or other products from any type of vegetable biomass, or in processes to produce dietary fiber.

According to the present invention, in the extender part of the ink the binder of the present ink compositions comprises a lignin in an amount of at least 50 wt.-% of the dry weight of the binder. Preferably, in the extender part of the ink the binder of the present ink compositions comprises a lignin in an amount of 50 to 80 wt.-%, more preferably of 55 to 70 wt.-% of the dry weight of the binder. Based on the total amount of the wet extender part of the ink, lignin may be present in amount of 8 to 25 wt.-%, preferably 8 to 15 wt.-%.

According to the present invention, in the entire ink (i.e. extender part and pigment base) the binder of the present ink compositions comprises a lignin in an amount of at least 25 wt.-% of the dry weight of the binder (a combination of the binder of the extender part and the binder of the pigment base part). Preferably, in the entire ink the binder of the present ink compositions comprises a lignin in an amount of 25 to 70 wt.-%, more preferably of 35 to 60 wt.-% of the dry weight of the binder (a combination of the binder of the extender part and the binder of the pigment base part). Based on the total amount of the wet ink, lignin may be present in an amount of up to 20 wt.-%.

While it is preferred to use only one type of lignin in the binder of the extender part, for specific applications it may be possible to also use combinations of the above-mentioned lignins.

According to the present invention, it is preferred that the lignin component is provided in the form of an aqueous solution. This can be achieved, for example, by dissolving the lignin in a sufficient amount of water. If necessary, the lignin may be brought into a water-soluble form, preferably into an ionized form by adding a basic compound such as an alkali hydroxide, earth-alkali hydroxide, or an amine. Preferred basic compounds in this respect are NaOH, KOH, NH₃ or primary, secondary or tertiary amines, for example MEA (monoethanolamine) or DMEA (dimethyl ethanolamine).

According to the present invention, preferably 10-30 wt.-% lignin are added to 70-90 wt.-% water. If necessary, 5-10 wt.-% of the water may be replaced by 5-10 wt.-% of a basic compound as described above.

According to this preferred embodiment of the present invention, the thus prepared aqueous solution of lignin is subsequently mixed with the other components described below.

A second component of the binder of the extender part of the ink compositions of the present invention is at least one acrylic resin.

According to a preferred embodiment of the present invention, suitable acrylic resins have an average molecular weight in the range of 1000 to 100.000 Da, an acid value above 60 mg KOH with respect to the dry polymer, and a glass transition temperature above 50°C (measured by digital scanning calorimetry (DSC according to DIN 51007).

Examples of suitable acrylic resins are copolymers of styrene and/or alpha-methyl styrene with one or more acrylic monomers selected from the group consisting of acrylic acid, methacrylic acid and other acrylate monomers used in water-based inks.

Examples of commercially available acrylic resins suitable for the present invention are Joncryl 690, Joncryl 678, Joncryl 682, Joncryl 8092, Joncryl 90, Joncryl 2189, Joncryl 665, Joncryl 667 (manufactured by BASF), Indurez SR10, Indurez SR20, Induprint SE90, Induprint SE900, Induprint SE199, Induprint PAC 281, Induprint PAC 504 (manufactured by Indulor); Neocryl A1091 (manufactured by DSM), and Lucidene 198 (manufactured by DOW).

According to the present invention, in the extender part of the ink the binder of the present ink compositions comprises said at least one acrylic resin in an amount of at least 1 to 45 wt.-%, preferably 2 to 35 wt.-%, most preferably 5 to 20 wt.-% of the dry weight of the binder.

According to the present invention, in the entire ink (i.e. extender part and pigment base) the binder of the present ink compositions comprises said at least one acrylic resin in an amount of at least 1 to 60 wt.-%, preferably 5 to 50 wt.-%, of the dry weight of the binder (a combination of the binder of the extender part and the binder of the pigment base part).

While it is preferred to use only one type of acrylic resin in the binder of the extender part, it is possible to also use combinations of the above-mentioned acrylic resins.

A third component of the binder of the extender part of the ink compositions of the present invention is at least one co-resin, wherein said co-resin is selected from the group consisting of polyamides, polyurethanes, polyvinylacetates, sulfopolyesters resins, polyvinyl alcohol resins, styrene-butadiene rubbers, ethylene-acrylic acid copolymers, perfluoropolyethers, polyolefins and chlorinated polyolefins, preferably from the group consisting of polyamides, polyurethanes, polyvinylacetates and sulfopolyesters resins.

According to the present invention, suitable polyamides are polyamides conventionally used in printing inks. Polyamides are well-known and need not be discussed in detail. Examples of suitable polyamides for the present invention can be obtained by condensation of a mixture of fatty acid oligomers (monomer/dimer/trimer) with aliphatic diamines, and optionally additional raw materials (e.g. carboxylic acids, esters, amines). Examples of commercially available polyamides suitable for the present invention are Eurelon 980 (manufactured by Huntsman) and AQ Nylon (manufactured by Toray).

According to the present invention, suitable polyurethanes are polyurethanes conventionally used in printing inks. Polyurethanes are well-known and need not be discussed in detail. Examples of suitable polyurethanes for the present invention are aqueous dispersions of aliphatic polyester or polyether urethanes. Those dispersions may be optionally stabilized with triethyl amine as neutralizing agent. Examples of commercially available polyurethanes suitable for the present invention are PU-431, PU-488 (manufactured by Picassian), Neorez R650, and Neorez R600 (manufactured by DSM).

According to the present invention, suitable polyurethanes may also be polyurethane-acrylic copolymers. Those copolymers may be preferably used as an aqueous dispersion. As an example, an aliphatic urethane acrylic dispersion may be mentioned. Those dispersions may be optionally stabilized with triethyl amine as neutralizing agent. An example of a commercially available polyurethane-acrylic copolymer suitable for the present invention is Neopac E200 (manufactured by DSM).

According to the present invention, suitable polyvinylacetates are polyvinylacetates conventionally used in coatings. Polyvinylacetates are well-known and need not be discussed in detail. According to the present invention, polyvinylacetate homopolymer as well as copolymers of vinylacetate with other monomers such as an alkylene, preferably ethylene, may be used. According to the present invention, suitable polyvinylacetates may be obtained by radical polymerization of vinyl acetate monomers or by radical co-polymerization of vinyl acetate monomers with ethylene and/or acrylic acids and/or acrylic monomers. Preferably, those polyvinylacetates are provided in the form of an aqueous emulsion. Examples of commercially available polyvinylacetates suitable for the present invention are Mowilith LDM 1081, Mowilith LDM 1365, Mowilith DM 1340, Mowilith PE292 S, Mowilith DM1, Mowilith DM2 (from Celanese), Orgal VB500, Orgal VB603, Orgal VM302, Orgal V50, Orgavil T401, Orgal VT-E, Orgal VH (from Organik Kimya); Vinnapas DP600, Vinnapas M50300, Vinnapas EP400, and Vinnapas EAF68 (from Wacker).

According to the present invention, suitable polyvinylalcohol resins are polyvinylalcohol resins conventionally used in coatings. Polyvinylalcohol resins are well-known and need not be discussed in detail. According to the present invention, suitable polyvinylalcohol resins may be obtained by partial or full hydrolysis of polyvinylacetate resins. Preferably, suitable polyvinylalcohol resins have a degree of hydrolysis from 80 to 99.8 %, based on the total amount of hydrolysable acetate groups, and an ester value from 3 to 180 (as determined according to DIN 53401). Examples of commercially available polyvinylalcohol resins suitable for the present invention are Selvol 107, Selvol 350, Selvol 203, Selvol 523 (from Sekisui), and Mowiol 13-88, Mowiol 20-98 (from Kuraray).

According to the present invention, suitable sulfopolyester resins are sulfopolyester resins conventionally used in printing inks. Sulfopolyester resins are well-known and need not be discussed in detail. According to the present invention, suitable sulfopolyester resins may be obtained by reaction of diacids and diols, wherein the thus obtained polyesters are subsequently made water-dispersible by including sulfonate groups. The sulfopolyesters may be stabilized with a counter-ion like Na+ or any other cation conventionally used for that purpose. Examples of commercially available sulfopolyester resins suitable for the present invention are Hydro-Rez 1100D, Hydro-Rez 1200D2, Hydro-Rez 1400D (from Lawter), and Eastek 1000, Eastek 1100, Eastek 1200, Eastek 1300, Eastek 1400 (from Eastman).

According to the present invention, suitable styrene-butadiene rubbers are styrene-butadiene rubbers conventionally used in coatings. Styrene-butadiene rubbers are well-known and need not be discussed in detail. Emulsions of styrene-butadiene rubbers are preferred. For example, latex binders based on styrene and butadiene copolymers may be used. Examples of commercially available styrene-butadiene rubbers suitable for the present invention are Acronal S305D, Acronal S504, Acronal 500D, Styronal D517, Styronal D628, Styronal D809 (from BASF).

According to the present invention, suitable ethylene-acrylic acid copolymers are ethylene-acrylic acid copolymers conventionally used in coatings. Ethylene-acrylic acid copolymers are well-known and need not be discussed in detail. They are conventionally obtained by radical polymerization of ethylene and acrylic acid. The thus obtained copolymer can be dispersed in water, and optionally neutralized with a base, such as ammonia (NH3) or an alkali base such as NaOH. Examples of commercially available ethylene-acrylic acid copolymers suitable for the present invention are Michemprime 4983R, Michemprime 4990R, Michemprime 5931 (from Michelman), and Aquaseal 1307, Aquaseal 1320, Aquaseal 2077 (from Paramelt).

According to the present invention, suitable perfluoropolyethers are perfluoropolyethers conventionally used in coatings. Perfluoropolyethers are well-known and need not be discussed in detail. Perfluoropolyethers may be linear or branched molecules with the general formula (CF₂CF₂O)ₙ. Examples of commercially available perfluoropolyethers suitable for the present invention are Solvera PT 5045, Solvera 5060, Solvera 5071 (from Solvay).

According to the present invention, suitable polyolefins or chlorinated polyolefins are polyolefins or chlorinated polyolefins conventionally used in coatings and printing inks. Polyolefins or chlorinated polyolefins are well-known and need not be discussed in detail. According to the present invention, polypropylene optionally reacted with chlorine and/or acrylates and/or maleic anhydride (MAH) may be used. Examples of commercially available polyolefins or chlorinated polyolefins suitable for the present invention are EH801, EW5303, EY-4055, NA-1001 (from Hardlen).

According to the present invention, in the extender part of the ink the binder of the present ink compositions comprises said at least one co-resin in an amount of at least 1 to 40 wt.-%, preferably 2 to 30 wt.-%, of the dry weight of the binder.

According to the present invention, in the entire ink (i.e. extender part and pigment base) the binder of the present ink compositions comprises said at least one co-resin in an amount of at least 0,1 to 30 wt.-%, preferably 1 to 20 wt.-%, of the dry weight of the binder (a combination of the binder of the extender part and the binder of the pigment base part).

While it is preferred to use only one type of co-resin in the binder of the extender part, it is possible to also use combinations of the above-mentioned co-resins.

According to the present invention, the binder in the extender part most preferably only consists of the above discussed components, i.e. at least one lignin, at least one acrylic resin and at least one co-resin, wherein said co-resin is selected from the group consisting of polyamides, polyurethanes, polyurethane-acrylic copolymers, polyvinylalcohol resins, polyvinylacetates, sulfopolyesters resins, styrene-butadiene rubbers, ethylene-acrylic acid copolymers, perfluoropolyethers resins, polyolefins and chlorinated polyolefins.

The extender part of the composition of the present invention comprises 10 to 50 wt.-%, preferably 12 to 45 wt.-%, of said binder as described above.

The entire ink composition of the present invention comprises 20 to 90 wt.-%, preferably 25 to 80 wt.-%, of a combination of said binder as described above and eventually a binder comprised in the pigment base part described below.

According to the present invention, the above described binder components are mixed with additives conventionally used in extender parts of flexographic or gravure printing ink compositions.

According to the present invention, the printing ink may furthermore comprise a colorant, preferably a pigment. According to the present invention any pigment which is typically used in flexographic or gravure inks such as monoazo yellows (e. g. CI Pigment Yellows 3,5,98); diarylide yellows (e. g. CI Pigment Yellows 12,13,14); Irgalite Blue, Pyrazolone Orange, Permanent Red 2G, Lithol Rubine 4B, Rubine 2B, Red Lake C, Lithol Red, Permanent Red R, Phthalocyanine Green, Phthalocyanine Blue, Permanent Violet, titanium dioxide, carbon black, etc, may be used. Exemplary pigments are White 6, Red 122, Red 57:1, Yellow 14, Yellow 83, Orange 5, Red 2, Red 48:2, Green 7, Blue 15:4, Violet 23, Violet 1, Acidic black 7, and Alkaline black 7.

Preferably, the pigment, if present, is provided in a portion of the entire composition which is called "pigment base". Said ink base preferably comprises, in addition to the at least one pigment, at least one conventionally used acrylic resin solution, such as a styrene-acrylic cpolymer (e.g. Joncryl 678) as binder, water as a solvent and optional additives, such as an antifoaming agent, a biocide or a neutralizing agent. Thus, the pigment is provided in form of a dispersion in the binder. Dispersion of the pigment in the binder can be carried out, for example, by milling methods (grinding step). Examples are ball mill, sand mill, horizontal media mill, high-shear fluid flow mill, a three-roll mill, or the like.

Preferably, said ink base comprises one or more pigments in an amount of 20 to 60 wt.-%, preferably 25 to 50 wt.-%, based on the total amount of the ink base, one or more acrylic resin solutions (binder) in an amount of 10 to 50 wt.-%, preferably 20 to 40 wt.-%, based on the total amount of the ink base, water in an amount of 10 to 40 wt.-%, preferably 20 to 30 wt.-%, based on the total amount of the ink base, and optional additives each in an amount in the range from 0,01-10 wt.-%, preferably 0,05-5 wt.-%, based on the total amount of the ink base.

After the optional grinding step has been completed, said ink base is combined with the so called extender part of the ink composition of the present invention, which is sometimes also referred to a technical varnish, and blended under suitable conditions. Said extender part comprises the binder of the present invention discussed above.

Thus, according to a preferred embodiment of the present invention, a pigment is provided in an ink base comprising at least one acrylic polymer component, and is subsequently mixed with an extender part comprising the binder of the present invention discussed above.

According to the present invention, the ink base and the extender part are preferably blended with each other in a ratio of ink base to extender from 20:80 to 50:50, preferably 40:60.

The printing inks of the present invention may thus be prepared like conventional printing inks, respectively, by mixing the individual components with each other under appropriate conditions.

According to the present invention, the amounts given for the individual components of an ink base, binder, extender or printing ink are understood such that the combination of all components sums up to 100 wt.-%.

According to the present invention, the printing ink may furthermore comprise additives such as fillers, surfactants, wax, adhesion promoters, plasticizers, anti-foam agents, retarders, thickening agents, and the like. The exact composition of an ink composition of the present invention depends upon the specific requirements imposed on the printing ink, and may be readily adjusted by a skilled man. The composition of suitable technical varnishes for gravure or flexographic printing inks is known to a skilled person and described, for example, in Leach(Pierce (eds.), The printing ink manual, 5th ed., Blueprint, 1993, p. 473-599.

The amount of such additives in the compositions of the present invention preferably lies in a range of 0-20 wt.-%, more preferably 1-15 wt.-%, of the weight of the entire composition.

The printing inks of the present invention may be prepared like conventional printing inks, respectively, by mixing the individual components with each other under appropriate conditions.

Thus, the present invention is also related to a method for manufacturing a composition as described above, comprising the steps of preparing a binder by combining said lignin, said at least one acrylic resin and said at least one co-resin, and subsequently combining said binder with water and optionally one or more further additives.

The present invention is furthermore related to the use of a binder, which is a combination of a lignin, at least one acrylic resin and at least one co-resin, wherein said co-resin is selected from the group consisting of polyamides, polyurethanes, polyurethane-acrylic copolymers, polyvinylalcohol resins, polyvinylacetates, sulfopolyesters resins, styrene-butadiene rubbers, ethylene-acrylic acid copolymers, perfluoropolyethers resins, polyolefins and chlorinated polyolefins, preferably from the group consisting of polyamides, polyurethanes, polyvinylacetates and sulfopolyesters resins, in a water-based ink composition.

The present invention is also related to the use of a water-based ink composition according to to the present invention for applying a layer onto an article, preferably in a gravure or a flexographic printing process.

The application of the printing ink onto an article is preferably carried out by a flexographic or gravure printing process.

The gravure printing process and the flexographic printing process are known to the skilled man and need not be described here in detail.

The article, which is the substrate of the above printing process, may be selected from a wide range of substrates commonly provided with ink. According to the present invention, the substrate may be selected from polymer substrates such as polyethylene or polypropylene or polyethylene terephthalate polymers, or may be a paper or a paperboard substrate.

The printing inks obtainable according to the present invention are suitable for a wide range of applications. In particular, they are suitable for all rigid and flexible packaging and labels in areas like food packaging (e.g., retortable bags, frozen food packaging, refrigerated food packaging, shelf stable food packaging, dry goods packaging, liquid food packaging, fast food wrappers and bags), pharmaceutical packaging (e.g., primary packaging, secondary packaging, booklets and instructions), personal hygiene packaging (e.g., soap packaging, hair care packaging, baby care packaging, feminine care packaging, male care packaging), home care packaging (e.g., detergent packaging, cleaner packaging), agricultural packaging (e.g., herbicide packaging, pest control packaging, fertilizer bags), industrial packaging (e.g.,_shopping bags, construction wrappers and bags, bread bags, bags for fruits and vegetables), and pet care packaging (e.g., pet food bags, pet medical packaging, pet hygiene packaging), corrugated paperboard boxes, flat board or compact board boxes and articles, paper sacks used as shopping bags or as industrial use (e.g. cement sacks).

Such packagings and labels are known in the art and need not be discussed in detail here.

Thus, the present invention is furthermore related to an article, in particular a rigid and flexible packaging or a label, comprising a cured layer derived from a composition of the present invention.

The present invention is furthermore related to a process for preparing an article, in particular a rigid and flexible packaging or a label, comprising the steps of applying printing ink as described above onto said article and curing said composition.

### Examples

The present invention will now be described in more detail with reference to non-limiting examples.

### Example 1a

A lignin solution was prepared by adding together and mixing 19.1 wt.-% lignin (Indulin AT, an alkaline lignin from the Kraft process sold by MeadWestvaco), 78.9 wt.-% water and 2 wt.-% of a base (monoethanolamine (MEA)). The resulting solution had a pH value of 9.5.

### Example 1b

An alternative lignin solution was prepared by adding together and mixing 19.1 wt.-% lignin (Protobind 3000, a alkaline lignin from the soda process sold by Greenvalue S.A.), 78 wt.-% water, 2.5 wt.-% ammonia (25% solution water) and 0.4 wt.-% of monoethanolamine (MEA). The resulting solution had a pH value of 9.1.

### Examples 2a-d

Extender formulations according to the present invention were prepared using the lignin solution according example 1a in combination with an acrylic resin and various co-resins. The exact composition of examples 2a-d is shown in table 1 below. The formulations were made by blending the components together.

**Table 1**

| Raw Materials | Chemical Nature | 2a | 2b | 2c | 2d |
|---|---|---|---|---|---|
| Lignin solution of example 1a | | 82,0 | 82,0 | 82,0 | 82,0 |
| Joncryl 90 | | 8,5 | 8,5 | 8,5 | 8,5 |
| Monopropyleneglycol | | 1,2 | 1,2 | 1,2 | 1,2 |
| Eurelon 980 | Polyamide* | 14,3 | | | |
| Neorez R650 | Polyurethane | | 11,3 | | |
| | Polyvinylacetate dispersion** | | | 6,6 | |
| Hydrorez 1100 D | Sulfopolyester | | | | 13,0 |
| TOTAL | | 106,0 | 103,0 | 98,3 | 104,7 |

| | | | | | |
|---|---|---|---|---|---|
| *Eurelon 980 is a solid resin. For the present examples, 30 wt.-% Eurelon 980 were blended with 50 wt.-% ethanol, 15 wt.-% water, and 5 et.-& of a 25% ammonia solution, to obtain an aqueous solution having a pH value of 9.8. 14.3 wt.-% of said solution were used. **The polyvinylacetate dispersion used has a solid content of 64-66%, a minimum film-forming temperature of 0°C and a glass transition temperature of -8°C. | | | | | |

### Comparative examples 3a-c

For comparison purposes, extender formulations were made where the binder was only made of a combination of lignin and acrylic resin (i.e. without any of the additional co-resins required by the present invention). The exact composition of examples 3a-c is shown in table 2 below. The formulations were made by blending the components together.

**Table 2**

| Raw Materials | Chemical Nature | 3a | 3b | 3c |
|---|---|---|---|---|
| Lignin solution of example 1a | | 82,0 | 57,0 | 80,8 |
| Joncryl 8083 | | 18,0 | 43,0 | |
| Joncryl 90 | | | | 18,1 |
| Monopropyleneglycol | | | | 1,2 |
| TOTAL | | 100,0 | 100,0 | 100,1 |

### Water resistance test

The extender compositions according to examples 2a to d and comparative examples 3a to c were printed onto a substrate (coated white top liner, Rieger LC) using a wire bar no. 2 (12 µm thickness). The print was immediately after printing dried with a conventional hair fan for 3 seconds. Thereafter, the print was left standing at room temperature (20°C) for 3 h. After 3 hours, the printed substrate was cut into pieces, and the pieces were rubbed 3 times with constant pressure with a wet friction surface (sponge or felt or non-woven fabric).

The appearance of the printed strip was thereafter assessed, according to scale from 0-5 (0: appearance of the sample was severely degraded, 5: no visual alteration of the appearance of the sample). The results are shown in table 3 below.

**Table 3**

| Example | Water resistance |
|---|---|
| 2a | 4 |
| 2b | 5 |
| 2c | 4 |
| 2d | 4 |
| 3a (comparison) | 1 |
| 3b (comparison) | 0 |
| 3c (comparison) | 1 |

It can be seen that the compositions of the present invention showed a significantly improved water resistance.

### Example 4

An ink composition of the present invention was prepared by blending the components described in table 4 below, in order to prepare the extender part.

**Table 4**

| Example Extender Composition | Wt.-% |
|---|---|
| Lignin solution from example 1b | 70,18 |
| Thickening agent (Styrene-acrylic, alkali soluble) | 3 |
| Polyvinylacetate dispersion* | 5,6 |
| Joncryl 90 | 7 |
| Polyethylene wax dispersion | 1 |
| Monopropylenegycol | 4 |
| Isopropanol | 3 |
| Biocid | 0, 02 |
| Anti-foaming agent | 0,2 |
| Urea | 4 |
| Glycerin | 2 |
| TOTAL | 100 |
| viscosity | 25"AC4 |
| pH | 8,7 |

| | |
|---|---|
| *The polyvinylacetate dispersion used has a solid content of 64-66%, a minimum film-forming temperature of 0°C and a glass transition temperature of -8°C. | |

Viscosity was measured with a standardized viscosity flow cup Afnor no. 4. 25"AC4 indicates that the composition flew off said cup within 25 seconds.

Said extender part was blended with a pigment base (UNI 12-114147-7, which is composed of PB15:3 pigment and styrene-acrylic resin solution), in a ratio of extender to pigment base of 60:40.

The thus obtained ink composition according to the present invention showed better water resistance characteristics than a commercially available water-based renewable ink composition (a 60:40 mixture of the commercially available extender UNIRICS 15-000275-6 from Siegwerk and the commercially available pigment base UNI 12-114147-7 from Siegwerk).

## Claims

1. A water-based ink composition containing an extender part and a pigment base part, **characterized in that** a binder in the extender part is a combination of a lignin, at least one acrylic resin and at least one co-resin, wherein said co-resin is selected from the group consisting of polyamides, polyurethanes, polyurethane-acrylic copolymers, polyvinylalcohol resins, polyvinylacetates, sulfopolyesters resins, styrene-butadiene rubbers, ethylene-acrylic acid copolymers, perfluoropolyethers resins, polyolefins and chlorinated polyolefins.

2. Composition according to claim 1, **characterized in that** said co-resin is selected from the group consisting of polyamides, polyurethanes, polyvinylacetates and sulfopolyesters resins.

3. Composition according to claim 1 or 2, **characterized in that** said lignin is selected from the group of lignins consisting of alkaline lignin from the Kraft or soda process, sulfur-free lignin, and derivatives therefrom, preferably a lignin amine salt, a submicron lignin, and a lignin neutralized with KOH.

4. Composition according to any one of claims 1 to 3, **characterized in that** said binder in the extender part comprises a lignin in an amount of at least 50 wt.-% of the dry weight of the binder.

5. Composition according to any one of claims 1 to 4, **characterized in that** said binder in the extender part comprises said at least one acrylic resin in an amount of 1 to 45 wt.-%, preferably 2 to 35 wt.-%, more preferably 5 to 20 wt.-% of the dry weight of the binder.

6. Composition according to any one of claims 1 to 5, **characterized in that** said binder in the extender part comprises said at least one co-resin in an amount of 1 to 40 wt.-%, preferably 2 to 30 wt.-%, of the dry weight of the binder.

7. Composition according to any one of claims 1 to 6, **characterized in that** the extender part of the composition comprises 10 to 50 wt.-%, preferably 12 to 45 wt.-%, of said binder.

8. Composition according to any one of claims 1 to 7, **characterized in that** the composition additionally comprises one or more additives.

9. Method for manufacturing a composition according to any one of claims 1 to 8, comprising the steps of preparing a binder by combining said lignin, said at least one acrylic resin and said at least one co-resin, and subsequently combining said binder with water and optionally one or more further additives.

10. Use of a binder, which is a combination of a lignin, at least one acrylic resin and at least one co-resin, wherein said co-resin is selected from the group consisting of polyamides, polyurethanes, polyvinylacetates, sulfopolyesters resins, polyvinyl alcohol resins, styrene-butadiene rubbers, ethylene-acrylic acid copolymers, perfluoropolyethers, polyolefins and chlorinated polyolefins, preferably from the group consisting of polyamides, polyurethanes, polyvinylacetates and sulfopolyesters resins, in a water-based ink composition.

11. Use of a water-based ink composition according to any one of claims 1 to 8 for applying a layer onto an article.

12. Use according to claim 11, wherein the step of applying said layer is performed with a flexographic or gravure printing method.

13. A process for preparing an article, in particular a rigid and flexible packaging or a label, the process comprising applying a composition according to any one of claims 1 to 8 onto said article and curing said composition.

14. An article, in particular a rigid and flexible packaging or a label, the article comprising a cured layer derived from the composition according to any one of claims 1 to 8.

15. Article according to claim 14, wherein said article is a rigid and flexible packaging selected from the group consisting of food packaging, pharmaceutical packaging, personal hygiene packaging, home care packaging, agricultural packaging, industrial packaging, pet care packaging, corrugated paperboard boxes, flat board or compact board boxes and articles, paper sacks used as shopping bags or for industrial use, and combinations thereof.

## Patentansprüche

1. Druckfarbenzusammensetzung auf Wasserbasis, die einen Streckmittelteil und einen Pigmentbasisteil enthält, **dadurch gekennzeichnet, dass** ein Bindemittel in dem Streckmittelteil eine Kombination eines Lignins, wenigstens eines Acrylharzes und wenigstens eines Co-Harzes ist, wobei das Co-Harz ausgewählt ist aus der Gruppe bestehend aus Polyamiden, Polyurethanen, Polyurethan-Acryl-Copolymeren, Polyvinylalkoholharzen, Polyvinylacetaten, Sulfopolyesterharzen, Styrol-Butadien-Kautschuken, Ethylen-Acrylsäure-Copolymeren, Perfluorpolyetherharzen, Polyolefinen und chlorierten Polyolefinen.

2. Zusammensetzung gemäß Anspruch 1, **dadurch gekennzeichnet, dass** das Co-Harz ausgewählt ist aus der Gruppe bestehend aus Polyamiden, Polyurethanen, Polyvinylacetaten und Sulfopolyesterharzen.

3. Zusammensetzung gemäß Anspruch 1 oder 2, **dadurch gekennzeichnet, dass** das Lignin ausgewählt ist aus der Gruppe von Ligninen bestehend aus alkalischem Lignin aus dem Kraft- oder Sodaverfahren, schwefelfreiem Lignin und Derivaten davon, vorzugsweise ein Lignin-Aminsalz, ein Submikrometer-Lignin und ein mit KOH neutralisiertes Lignin.

4. Zusammensetzung gemäß einem der Ansprüche 1 bis 3, **dadurch gekennzeichnet, dass** das Bindemittel in dem Streckmittelteil ein Lignin in einer Menge von wenigstens 50 Gew.-% des Trockengewichts des Bindemittels umfasst.

5. Zusammensetzung gemäß einem der Ansprüche 1 bis 4, **dadurch gekennzeichnet, dass** das Bindemittel in dem Streckmittelteil das wenigstens eine Acrylharz in einer Menge von 1 bis 45 Gew.-%, vorzugsweise 2 bis 35 Gew.-%, bevorzugter 5 bis 20 Gew.-%, des Trockengewichts des Bindemittels umfasst.

6. Zusammensetzung gemäß einem der Ansprüche 1 bis 5, **dadurch gekennzeichnet, dass** das Bindemittel in dem Streckmittelteil das wenigstens eine Co-Harz in einer Menge von 1 bis 40 Gew.-%, vorzugsweise 2 bis 30 Gew.-%, des Trockengewichts des Bindemittels umfasst.

7. Zusammensetzung gemäß einem der Ansprüche 1 bis 6, **dadurch gekennzeichnet, dass** der Streckmittelteil der Zusammensetzung 10 bis 50 Gew.-%, vorzugsweise 12 bis 45 Gew.-%, an dem Bindemittel umfasst.

8. Zusammensetzung gemäß einem der Ansprüche 1 bis 7, **dadurch gekennzeichnet, dass** die Zusammensetzung zusätzlich einen oder mehrere Zusatzstoffe umfasst.

9. Verfahren zum Herstellen einer Zusammensetzung gemäß einem der Ansprüche 1 bis 8, umfassend die Schritte des Herstellens eines Bindemittels durch Kombinieren des Lignins, des wenigstens einen Acrylharzes und des wenigstens einen Co-Harzes und anschließend Kombinieren des Bindemittels mit Wasser und gegebenenfalls einem oder mehreren weiteren Zusatzstoffen.

10. Verwendung eines Bindemittels, das eine Kombination eines Lignins, wenigstens eines Acrylharzes und wenigstens eines Co-Harzes ist, wobei das Co-Harz ausgewählt ist aus der Gruppe bestehend aus Polyamiden, Polyurethanen, Polyvinylacetaten, Sulfopolyesterharzen, Polyvinylalkoholharzen, Styrol-Butadien-Kautschuken, Ethylen-Acrylsäure-Copolymeren, Perfluorpolyetherharzen, Polyolefinen und chlorierten Polyolefinen, vorzugsweise aus der Gruppe bestehend aus Polyamiden, Polyurethanen, Polyvinylacetaten und Sulfopolyesterharzen, in einer Druckfarbenzusammensetzung auf Wasserbasis.

11. Verwendung einer Druckfarbenzusammensetzung auf Wasserbasis gemäß einem der Ansprüche 1 bis 8 zum Aufbringen einer Schicht auf einen Gegenstand.

12. Verwendung gemäß Anspruch 11, wobei der Schritt des Aufbringens der Schicht mit einem Flexo- oder Tiefdruckverfahren durchgeführt wird.

13. Verfahren zum Herstellen eines Gegenstands, insbesondere einer starren und flexiblen Verpackung oder eines Etiketts, wobei das Verfahren das Aufbringen einer Zusammensetzung gemäß einem der Ansprüche 1 bis 8 auf den Gegenstand und das Härten der Zusammensetzung umfasst.

14. Gegenstand, insbesondere eine starre und flexible Verpackung oder ein Etikett, wobei der Gegenstand eine gehärtete Schicht umfasst, die aus der Zusammensetzung gemäß einem der Ansprüche 1 bis 8 gefertigt ist.

15. Gegenstand gemäß Anspruch 14, wobei der Gegenstand eine starre und flexible Verpackung ausgewählt aus der Gruppe bestehend aus Lebensmittelverpackung, pharmazeutischer Verpackung, Körperhygieneverpackung, Haushaltspflegeverpackung, landwirtschaftlicher Verpackung, industrieller Verpackung, Haustierpflegeverpackung, Wellpappeschachteln, Schachteln und Gegenständen aus flacher Pappe oder kompakter Pappe, Papierbeuteln zur Verwendung als Einkaufsbeutel oder zur industriellen Verwendung und Kombinationen davon ist.

## Revendications

1. Composition d'encre à base d'eau contenant une partie de diluant et une partie de base de pigment, **caractérisée en ce qu'**un liant présent dans la partie de diluant est une combinaison d'une lignine, d'au moins une résine acrylique et d'au moins une co-résine, ladite co-résine étant sélectionnée dans le groupe constitué de polyamides, de polyuréthanes, de copolymères de polyuréthane-composé acrylique, de résines d'alcool polyvinylique, de polyacétates de vinyle, de résines de sulfopolyesters, de caoutchoucs de styrène-butadiène, de copolymères d'éthylène-acide acrylique, de résines de perfluoropolyéthers, de polyoléfines et de polyoléfines chlorées.

2. Composition selon la revendication 1, **caractérisée en ce que** ladite co-résine est sélectionnée dans le groupe constitué de polyamides, de polyuréthanes, de polyacétates de vinyle et de résines de sulfopolyesters.

3. Composition selon la revendication 1 ou 2, **caractérisée en ce que** ladite lignine est sélectionnée dans le groupe de lignines constitué de la lignine alcaline produite par le procédé kraft ou le procédé soude, de la lignine sans soufre, et de dérivés de celles-ci, préférablement un sel de lignine-amine, une lignine submicronique, et une lignine neutralisée par KOH.

4. Composition selon l'une quelconque des revendications 1 à 3, **caractérisée en ce que** ledit liant dans la partie de diluant comprend une lignine dans une quantité d'au moins 50 % en poids du poids sec du liant.

5. Composition selon l'une quelconque des revendications 1 à 4, **caractérisée en ce que** ledit liant dans la partie de diluant comprend ladite au moins une résine acrylique dans une quantité de 1 à 45 % en poids, préférablement de 2 à 35 % en poids, plus préférablement de 5 à 20 % en poids, du poids sec du liant.

6. Composition selon l'une quelconque des revendications 1 à 5, **caractérisée en ce que** ledit liant dans la partie de diluant comprend ladite au moins une co-résine dans une quantité de 1 à 40 % en poids, préférablement de 2 à 30 % en poids, du poids sec du liant.

7. Composition selon l'une quelconque des revendications 1 à 6, **caractérisée en ce que** la partie de diluant de la composition comprend de 10 à 50 % en poids, préférablement de 12 à 45 % en poids, dudit liant.

8. Composition selon l'une quelconque des revendications 1 à 7, **caractérisée en ce que** la composition comprend en outre un ou plusieurs additifs.

9. Procédé de fabrication d'une composition selon l'une quelconque des revendications 1 à 8, comprenant les étapes qui consistent à préparer un liant en combinant ladite lignine, ladite au moins une résine acrylique et ladite au moins une co-résine, et ensuite à combiner ledit liant avec de l'eau et optionnellement un ou plusieurs additifs supplémentaires.

10. Utilisation d'un liant, lequel est une combinaison d'une lignine, d'au moins une résine acrylique et d'au moins une co-résine, dans laquelle ladite co-résine est sélectionnée dans le groupe constitué de polyamides, de polyuréthanes, de polyacétates de vinyle, de résines de sulfopolyesters, de résines d'alcool polyvinylique, de caoutchoucs de styrène-butadiène, de copolymères d'éthylène-acide acrylique, de perfluoropolyéthers, de polyoléfines et de polyoléfines chlorées, préférablement dans le groupe constitué de polyamides, de polyuréthanes, de polyacétates de vinyle, de résines de sulfopolyesters, dans une composition d'encre à base d'eau.

11. Utilisation d'une composition d'encre à base d'eau selon l'une quelconque des revendications 1 à 8 pour l'application d'une couche sur un article.

12. Utilisation selon la revendication 11, dans laquelle l'étape d'application de ladite couche est réalisée avec un procédé d'impression flexographique ou d'héliogravure.

13. Procédé de préparation d'un article, en particulier un emballage rigide et flexible, ou une étiquette le procédé comprenant l'application d'une composition selon l'une quelconque des revendications 1 à 8 sur ledit article et le durcissement de ladite composition.

14. Article, en particulier un emballage rigide et flexible ou une étiquette, l'article comprenant une couche durcie dérivée de la composition selon l'une quelconque des revendications 1 à 8.

15. Article selon la revendication 14, ledit article étant un emballage rigide et flexible sélectionné dans le groupe constitué d'emballages alimentaires, d'emballages pharmaceutiques, d'emballages d'hygiène personnelle, d'emballages de produits d'entretien domestiques, d'emballages agricoles, d'emballages industriels, d'emballages de produits pour animaux de compagnie, de boîtes en carton ondulé, de boîtes et d'articles en carton plat ou en carton compact, de sacs en papier utilisés comme sacs à provisions ou à usage industriel, et de combinaisons de ceux-ci.
